# EUROPEAN PATENT SPECIFICATION

(11) **EP 1 545 047 B1**
(45) Date of publication and mention of the grant of the patent: **14.01.2009**
(21) Application number: 04105474.3
(22) Date of filing: 03.11.2004
(51) Int. Cl.: H04L 7/033, H04L 25/06

(54) **Improvements to data recovery circuits using oversampling for ISI compensation**
Verbesserungen für Datenrückgewinnungsschaltungen mit Überabtastung zur Intersymbolinterferenzkompensation
Améliorations à des circuits de récupération de données utilisant un suréchantillonnage pour la compensation de l'interférence intersymbole

(30) Priority: 19.12.2003 EP 03368123
(43) Date of publication of application: 22.06.2005
(73) Proprietor: International Business Machines Corporation, Armonk, NY 10504 (US)
(72) Inventor: VALLET, Vincent, 91540, Mennecy (FR); HAUVILLER, Philippe, 91760, Itteville (FR)
(74) Representative: Therias, Philippe

(56) References cited:
- EP-A2- 1 199 837
- US-A1- 2003 095 619
- US-A1- 2003 115 542
- US-B1- 6 584 163

## Description

### FIELD OF THE INVENTION

The present invention relates to high speed serial communications/data transfers between integrated circuits or systems and more particularly to improvements to data recovery circuits based on an oversampling technique for intersymbol interference (ISI) compensation.

### BACKGROUND OF THE INVENTION

In the field of high speed serial communications/data transfers between integrated circuits or systems, data recovery circuits are extensively used in transceivers. The performance of a data recovery circuit is intimately tied to its capacity to correctly recover the transmitted data when the clock period varies with time. It must also be able to deal with another type of troubles introduced by transmission channel artifacts as well as by modulation and pulse shaping components in the transmission paths. Therefore, to sustain high data rate, the data recovery circuit must be able to deal with these data perturbations usually referred to respectively as the jitter and intersymbol interference (ISI).

Let us thus consider a conventional data recovery circuit. Schematically, it first includes an oversampling circuit that generates a plurality of data samples during each data period. It further includes a decision circuit that is able to determine which one of the data samples is the best to keep.

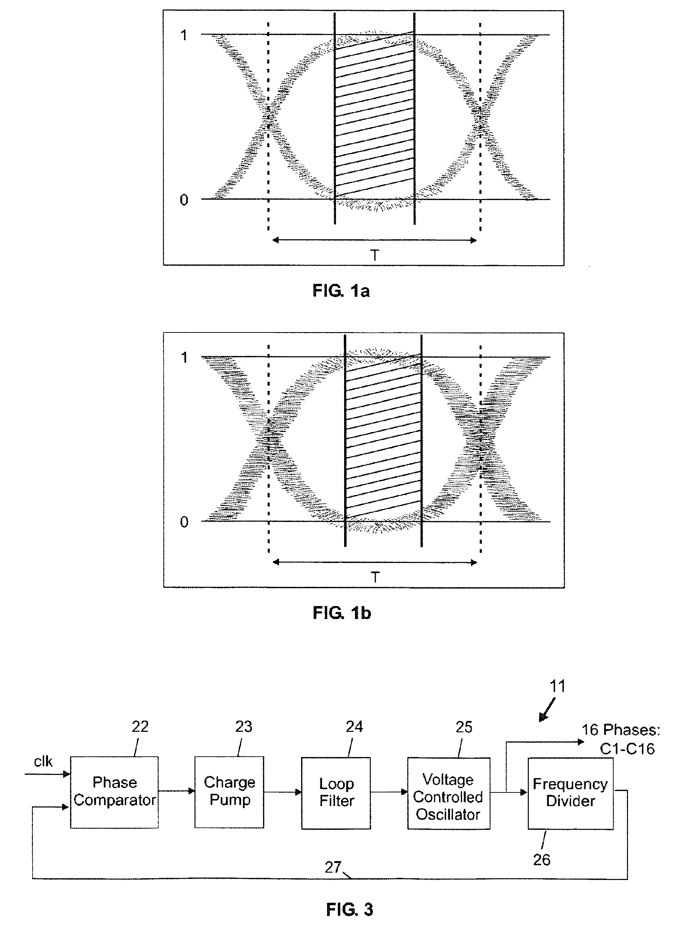

The effect of the jitter is to decrease the width of the time interval in which the data signal can be reliably sampled. The depending on the past values of the data. For high speed data transfers, this ISI can substantially decrease the capacity of the data recovery circuit to tolerate the random data jitter. FIG. la is an example of a typical eye diagram for a high speed serial data link. Data jitter and phase error between the reference clock and data can significantly reduce the sampling window (hatched area) which thus becomes shorter than the bit period T. FIG. 1b is an example of the same eye diagram when an ISI perturbation is added. As apparent in FIG. 1b, the effect of ISI on the data is not only to further close the eye diagram but also to shift it to the right because the ISI effect is to slightly delay the data stream. ISI compensation is therefore a major concern to date in high speed serial data communications/tranfers.

US patent 6 249 544 assigned to Broadcom Corp. describes a system and a method for providing ISI compensation to an input signal in a multipair transceiver system. Standard transceivers employed to date make an extensive use of data recovery circuits organized around an oversampling circuit that are very sensitive to ISI. In this reference, ISI compensation is performed in two stages wherein the first stage mainly consists of a pulse shaping filter. Such an analog filter is a relatively complex and expensive piece of hardware. In addition, this solution is not adequate for digital circuit integration. According to US 20030095619 A1 there is disclosed a sample selection and data alignment circuit that is able to recover (retime) a data on a predefined phase of a multiphase clock signal. A plurality of over sampled signals (SO, ... , S.sub.n-1) is obtained by over sampling an incoming serial binary data (bits) stream with the n phases (C.sub.0, ... , C.sub.n-1) of a multiphase clock signal. A reliable over sampled signal is selected according to a select signal (G.sub.0... , G.sub.n-1) generated by an edge detector which designates which over sampled signal is the best for subsequent processing. In essence, the circuit comprises a plurality of n substantially identical logic blocks. The first logic block includes a latch receiving sampled signal So on its data input and the phase clock signal C.sub.0 on its clock input. Each other logic block, e.g. logic block i, further includes a multiplexer having two inputs, the first input is connected to the output of the latch of the preceding logic block and the second input receives sampled signal S.sub.i. The multiplexer is controlled by a signal which is either G.sub.1 or the control signal of the following multiplexer. Finally, the output of the multiplexer is connected to the data input of the latch, the clock input of which receives clock signal C.sub.i. The output of the latch in the last logic block is connected to the clock input of an output latch, the clock input of which is coupled to a phase in opposition with phase C.sub.n-1. The output latch stores the recovered data during a full clock period.

### SUMMARY OF THE INVENTION

It is therefore a primary object of the present invention to provide improvements to data recovery circuits using oversampling for ISI compensation.

It is another object of the present invention to provide improvements to data recovery circuits using oversampling for an efficient ISI compensation at very low cost.

It is another object of the present invention to provide improvements to data recovery circuits using oversampling that allow full digital circuit integration.

According to the present invention there is described an improved data recovery circuit based on an oversampling technique wherein ISI is compensated. The improvement mainly consists to connect a detection circuit at the output of a conventional recovery circuit comprised of an oversampling circuit, a decision circuit and a data sample selection circuit as standard. The recovered data is thus applied to the detection circuit which includes flip-flops to memorize the previous state of the recovered data when none data transition is detected within a predefined number of data periods. The role of the detection circuit is to detect a predetermined number n of identical bits. It generates a feedback signal which is applied to the decision circuit indicating that such a sequence of n identical bits (wherein parameter n is equal to 2 or 3) has been identified. This signal is also applied to the data sample selection circuit to allow to adjust the data sample selection by one or more data samples.

As a result, the past values of the recovered data are memorized, so that it is possible to shift the position of the best data sample to be kept (as representative of the ideal recovered data) in order to take into account an extra delay in the next data transition to come for ISI compensation.

The novel features believed to be characteristic of this invention are set forth in the appended claims. The invention itself, however, as well as other objects and advantages thereof, may be best understood by reference to the following detailed description of an illustrated preferred embodiment to be read in conjunction with the accompanying drawings.

### BRIEF DESCRIPTION OF THE DRAWINGS

FIG. 1a shows a typical eye diagram for a high speed serial data link wherein some jitter can be noticed.
FIG. 1b shows the eye diagram of FIG. 1a when some ISI perturbation is added that results in a relative closure of the eye.
FIG. 2 shows the improved data recovery circuit wherein ISI compensation has been implemented according to the present invention.
FIG. 3 is the circuit diagram of the multiphase clock generator of FIG. 2 using a standard phase locked loop (PLL) circuit designed to generate N=16 phases.
FIG. 4 is the circuit diagram of the oversampling circuit of FIG. 2.
FIG. 5 is the circuit diagram of the edge detection circuit of FIG. 2.
FIG. 6 is the circuit diagram of the data edge memory of FIG. 2.
FIG. 7 is the circuit diagram of the selection determination circuit of FIG. 2.
FIG. 8 is the circuit diagram of the selection validation circuit of FIG. 2.
FIG. 9 is the circuit diagram of the selection memory of FIG. 2.
FIG. 10 is the circuit diagram of the data selection circuit of FIG. 2.
FIG. 11 shows a particular implementation of the detection/configuration circuit depicted in FIG. 2 that is an essential feature of the present invention.

### DESCRIPTION OF A PREFERRED EMBODIMENT

In essence, the present invention relates to an improved data recovery circuit based on an oversampling technique for ISI compensation. The disclosed circuit operates independently of the number of data links so that the data recovery mechanism of the present invention will be only described hereinbelow for one data link.

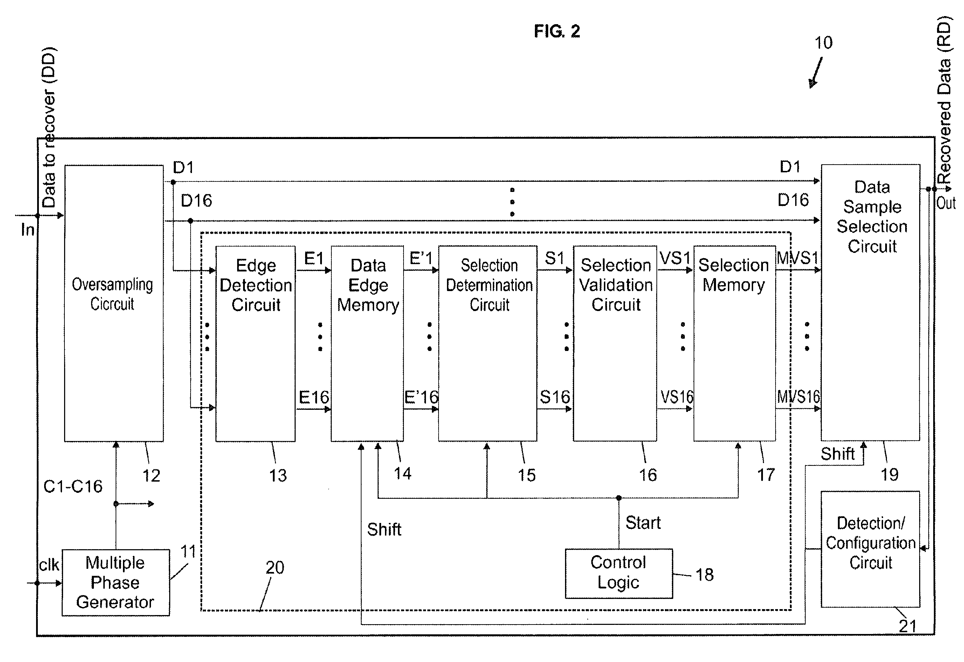

Turning to FIG. 2, the improved data recovery circuit 10 first includes a multiple phase generator 11 driven by a reference clock synchronized with the data link. The multiphase clock generator 11 is required to generate an adequate number n of clock phases, e.g. 16 in the present implementation, referenced C₁ to C₁₆, that are derived from a reference clock labeled clk. Said multiple phases are applied to an oversampling circuit 12 (and to other circuits whenever necessary) that receives the stream of serial data to recover at the In terminal to generate data samples, referenced D₁ to D₁₆. It further includes an edge detection circuit 13, a data edge memory 14, a selection determination circuit 15, a selection validation circuit 16, and a selection memory 17 that are connected in series. Control logic circuit 18 plays the role of a state machine vis à vis some blocks. Logic circuits and memories 13 to 18 form the so-called decision circuit referenced 20. Finally, the data samples D₁ to D₁₆ and the signals MVS₁ to MVS₁₆ output by the selection memory 17 are applied to data selection circuit 19. In essence, the incoming stream of serial data is continuously oversampled in oversampling circuit 12 by means of said multiple phases of the reference clock. Each data sample is compared in edge detector circuit 13 to the data sample collected with the next adjacent clock phase to determine the presence of a data edge or transition and the edge information i.e. the edge positions, is collected in data edge memory 14 for a duration that can be tuned. This data edge memory 14 can be cleared at regular time intervals. Tuning and clearing are performed by control logic circuit 18. The selection determination circuit 15 uses the memorized edge information to indicate which data sample is the farthest from the data edges. Selection validation circuit 16 has the key role of validating the selection to avoid false determination due to jitter and skew.

The validated values of the selection signals are memorized in selection memory 17, so that these values can be used while new data edges are processed and new selection signals are updated. Finally, the memorized validated selection signals MVS₁ to MVS₁₆ and the data samples D₁ to D₁₆ are exploited in data selection circuit 19 to recover the data. As apparent in FIG. 2, the recovered data RD is available at the Out terminal. Block 20 which is composed of a plurality of logic circuits and memories will be referred to hereafter as the decision circuit. The decision circuit is thus based on the detection of data edges or transitions in the set of data samples to drive the data sample selection circuit 19 in order to select the best sample to be kept, i.e. the recovered data RD.

Now, according to the present invention, the recovered data RD is exploited in an innovative detection/configuration circuit 21 which basically has the key role of detecting a set of consecutive identical data bits. When a sequence of n consecutive identical data bits is identified, it delivers a signal, labeled Shift used as a feedback signal that is first applied to the data edge memory 14, so that the decision circuit 20 does not take into account the positions of data transitions immediately following such a sequence of identical data bits. It is not necessary to exactly count the number of consecutive identical data bits as the ISI is generally not sensitive to a sequence of more than 3 consecutive identical bits, so that in practice, n is a configurable parameter equal to 2 or 3 that is configured by the user. It has been discovered that this sequence is the major cause of ISI and will therefore delay the position of the data transition.

Ignoring the late transitions due to ISI has the immediate effect of significantly opening the eye diagram. Once that the decision circuit 20 is directed to ignore the late transition, it is then necessary to temporarily shift the data sample selection indicated by the decision circuit when a sequence of identical data bits is identified. For any data bit following a sequence of n identical data bits, two cases are to be considered, whether the new bit is again identical or not. If identical, a shift by one or more data sample position does not make any difference, on the contrary, if the new bit has the opposite value by respect to the identified sequence, in this case, the ISI effect will delay the arrival of the new value. To that end, the Shift signal is applied to the data sample selection circuit 19 to shift the data selection by one data sample until the next data edge or transition.

### 1. Description of the multiphase clock generator 11

The preferred implementation uses a phase locked loop oscillator (PLL) to generate n=16 multiple phases of a reference clock. The clock frequency can be the same as the data frequency, i.e. one data bit per clock period or half of the data frequency, i.e. two data bits per clock period, also referred to as single data rate (SDR) or double data rate (DDR) respectively. The reference clock may be synchronously transmitted by the distant apparatus or may be recovered from the data stream using standard clock recovery circuits. A conventional PLL based multiphase clock generator is shown in FIG. 3 where it bears numeral 11. Now turning to FIG. 3, the reference clock signal clk and the loop signal that is internally generated by the PLL circuit 11 are applied to the phase comparator 22, which in turn generates a signal that is supplied to a charge pump 23. The latter outputs a controlled signal that is fed to a voltage controlled oscillator (VCO) circuit 25 via a loop filter 24. The VCO circuit 25 is coupled to a frequency divider 26 that supplies said loop signal on line 27. The desired number n of oversampling clock phases, sixteen in the instant case, obtained either on the rising edge or the falling edge of the reference clock, are referenced C₁ to C₁₆.

### 2. Description of the oversampling circuit 12

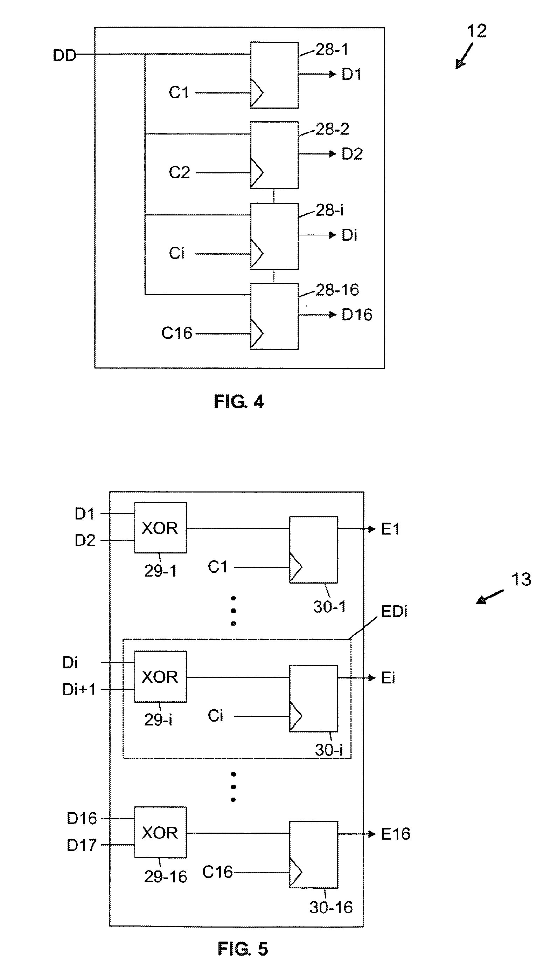

The oversampling circuit 12 collects either one bit (SDR) or two consecutive bits (DDR in sixteen samples. The sampling is done on each phase C₁ to C₁₆. An example of a simple implementation of oversampling circuit 12 is shown in FIG. 4.

Now turning to FIG. 4, oversampling circuit 12 includes 16 flip-flops 28-1 to 28-16 that are respectively controlled by the sixteen phases C₁ to C₁₆. D₁ to D₁₆ represent the 16 data samples available at the output of their respective flip-flop.

### 3. Description of the edge detection circuit 13

The edge detection circuit 13 is directly connected at the oversampling circuit 12 output and is responsible to detect a value change between two consecutive data samples. Now turning to FIG. 5, the edge detection circuit 13 is made of 16 edge detection elements, each one corresponding to a data sample.

Let us consider edge detection element EDi, it consists of a XOR gate 29-i that compares the two consecutive data samples Di and Di+1. The comparison result Ei, i.e. the edge information, is stored in a flip-flop 30-i clocked by the same clock phase Ci as the first of the two samples to be compared.

There are as many edge detection elements as there are data samples. When a data transition is detected between two consecutive data samples, the edge detection element output switches to the '1' level during a single clock period. As it will be better understood later on, to allow data selection circuit 19 to select the best data sample to recover, the edge information is collected during an extended period of time so that the data jitter with regards to oversampling clock phases is taken into account.

### 4. Description of the data edge memory 14

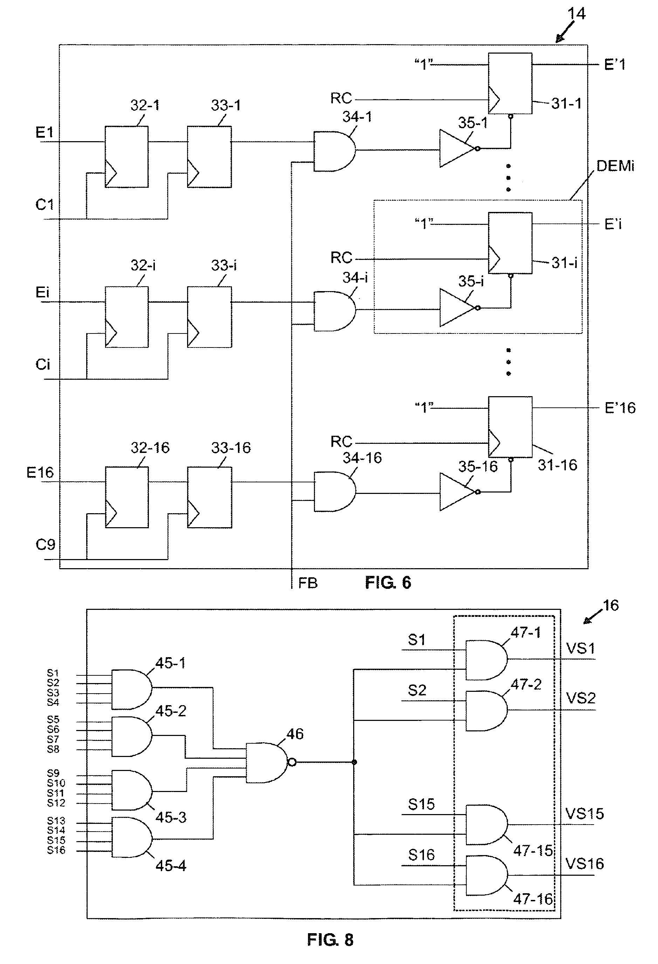

The data edge memory block 14 is directly connected at the edge detection circuit 13 output. Now turning to FIG. 6, the data edge memory block 14 is made of 16 data edge memory elements, each one corresponding to a data sample. Thus, there are as many data edge memory elements as there are edge detection elements. The data edge memory block 14 is a first key feature of the present invention. Let us consider data edge memory element DEMi, it mainly consists of an asynchronous reset flip-flop (or a similar register element) 31-i which has its data input permanently set to '1' and its clock input connected to a reset signal RC. The RC clock signal is a pulse used to reset periodically every data edge memory elements at the '1' value. In the preferred implementation, the RC signal period or data edge sampling period, is tuned in a configuration register (not shown). The edge information signal Ei is applied to the asynchronous input of flip-flop 31-i via a logic circuitry comprised of two consecutive latches 32-i and 33-i, a two-way AND gate 34-i that are serially connected to inverter 35-i. Signal Ei is first applied on the data input of latch 32-i, the output of which is connected to the data input of latch 33-i. Both latches receive the phase Ci on their clock input, wherein Ci=C1 for i = 1 to 8 and Ci=C9 for i = 9 to 16. The signal that is output by flip-flop 33-i is applied on a first input of AND gate 34-i which receives the feedback signal Shift on its other input. The role of these two batteries of latches is to ensure a latency equal to the latency of the data sample selection circuit 19. Feedback signal Shift allows to suppress edge detection in the data edge memory 14 that would result from ISI perturbations. This suppression is performed thanks to the battery of AND gates 34-1 to 34-16. In this preferred implementation, any edge information signal Ei at the '1' level, i.e. indicating the presence of a data edge, sets a '0' level in the corresponding flip-flop 31-i. The signal latched in flip-flop 31-i, labeled E'i, at this '0' level, is kept for an extended length of time such as several tenths or hundreds of clock periods.

One advantage of using an asynchronous reset flip-flop is that it allows to collect data edge events during such an extended period of time very simply, however, other implementations could be envisioned as well. Another advantage is that it collects the edge information independently of their related oversampling clock phase. As a significant result, all signals derived therefrom could be exploited with a determined oversampling clock phase, e.g. C₁. In this preferred implementation, sixteen phases of a reference clock are thus used to collect sixteen data samples during each clock period. The following examples illustrate the values of the E'₁ to E'₁₆ signals for different cases.
Example 1 represents E' values for single data rate (SDR) data without jitter. The position of the single '0' corresponds to the sample position where a data transition was detected.
   1 1 1 1 1 0 1 1 1 1 1 1 1 1 1 1
Example 2 represents E' values for single data rate (SDR) data with jitter. The transition position varies in time due to the presence of jitter, so that more than one data transitions are detected.
   1 1 1 0 0 0 1 1 1 1 1 1 1 1 1 The zone filled with '0's corresponds to the grayed zone in the eye diagram of FIG. 1.
Example 3 represents E' values for double data rate (DDR) data without jitter. As there are now two bits of data per clock period, two data transition positions were detected.
   1 1 1 1 1 0 1 1 1 1 1 1 1 0 1 1
Example 4 represents E' values for DDR data with jitter. The presence of jitter on the incoming data stream has the effect of moving the detected data edge randomly around a central position. The effect on the E' values is to increase the width of the zones with adjacent '0's.
   1 1 1 1 0 0 0 1 1 1 1 1 0 0 0 1

Therefore, the edge information is presented under the form of a bit map. A bit set to '0' indicates that a data edge has been detected at this corresponding sample position during the duration of a previous edge search and a bit set to '1' indicates a sample position where no data edge was seen during the same duration. Assuming a reasonable level of jitter and further assuming the edge information is collected for a long duration compared to the data bit period, then the bit map appears as one zone (SDR) or two zones (DDR) filled with adjacent '0's (corresponding to the zone where data edges were detected) surrounded by adjacent '1's. The last bit map position is considered as adjacent to the first bit map position and conversely. Therefore, in the case of DDR data, the bit map contains two zones filled with '0's separated by zones filled with '1's and in the case of SDR data, the bit map contains one zone filled with '0's surrounded by a zone filled with '1's.

### 6. Description of the selection determination circuit 15

The selection determination circuit 15 is directly connected at the data edge memory block 14 output and has the essential role of determining which data sample(s) is (are) to be kept.

In essence, it uses the memorized edge information to indicate which sample is the farthest from the data edges. At the input of this circuit, the edge information is thus presented under the form of a bit map with as many bits as there are samples. The selection determination circuit locates the edges of the zone(s) filled with '1's and progressively reduces the width of the zone until it only contains only one '1's. As this width reduction is performed alternatively on each side, then the remaining '0' points to the center of the zone where none data edge was located, i.e. it points to the data sample which is the farthest from the data edge position.

To recover the data when the incoming data stream is jittered, it is important to select the sample (in case of SDR data) or the samples (for DDR data) located the farthest from any possible position of a data edge. Looking now at the E' values shown in the above examples, selecting the best sample corresponds to localizing the middle of the zone filled with '1's. This is done with the repetition of the two-step algorithm described below.

In a first step, the particular pattern 110 is searched in the suite of the E' values to locate the right side of a zone filled with '1's. In the search for this right pattern (RP), the right most value of the suite of the E' values (E'₁₆ in this preferred implementation) is considered to be adjacent with the leftmost value of the suite of E' value (i.e. E'₁).

Each time the 110 RP pattern is found, it is replaced by the 100 value, so that it effectively decreases the width of the zone filled with '1's by one unit and by the right side of the zone.

The second step of the algorithm searches for the 011 pattern which is characteristic of the left side of a zone filled with '1's in the suite of E' values. Similarly, in the search for this left pattern (LP), the leftmost value of the suite of the E' values (E'₁ in the preferred implementation) is considered to be adjacent with the rightmost value of the suite of E' values (i.e. E'₁₆). Each time the 011 LP pattern is found, it is replaced by the 001 value so that it effectively decreases the width of the zone filled with '1's by one unit and by the left side of the zone. This algorithm is repeated by successive iterations until the width of the zone filled with '1's is reduced to a single position, in other words it just remains one '1' (approximately, the central one in the zone).

When recovering SDR data, only one '1' value is found and this single value correspond to the position of the best sample to be kept as the recovered data. When recovering DDR data, two different '1's are kept corresponding to the positions of the best samples to be kept as the data to recover in the incoming data stream.

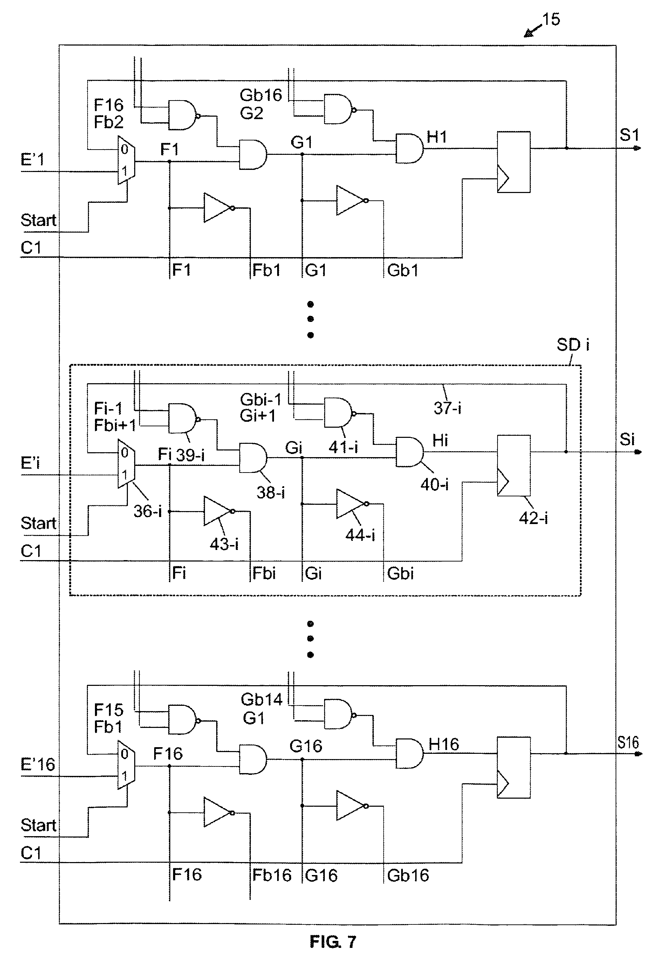

FIG. 7 shows a preferred hardware implementation of the above described algorithm that functionally performs these operations. The selection determination circuit 15 is another key feature of the present invention. Now turning to FIG. 7, the selection determination circuit 15 is made of sixteen selection determination elements SDi (i = 1 to 16), each one corresponding to a data sample. Thus, there are as many selection determination elements as there are data edge memory elements.

Let us consider Example 2 for the sake of simplicity, applying the above two-step algorithm to process the initial bit map, will result in the following bit sequences:
1 1 1 1 0 0 0 1 1 1 1 1 1 1 1 1
1 1 1 0 0 0 0 1 1 1 1 1 1 1 1 1 1 (1^{st} step RP, 1^{st} iteration)
1 1 1 0 0 0 0 0 1 1 1 1 1 1 1 1 (2^{sd} step LP, 1^{st} iteration)
1 1 0 0 0 0 0 0 1 1 1 1 1 1 1 1 (1^{st} step RP, 2^{sd} iteration)
1 1 0 0 0 0 0 0 0 1 1 1 1 1 1 1 (2^{sd} step LP, 2^{sd} iteration)
and so on, until the following sequence is obtained:
0 0 0 0 0 0 0 0 0 0 0 0 0 1 0 0 (2^{sd} step LP, 6^{th} iteration)
indicating thereby that the fourteenth data sample is the best one. Still referring to FIG. 7, let us consider selection determination element SDi. A two-way selector 36-i receives signal E'i (output by data edge memory element DEMi) on a first input and the signal, referred to as the selection signal Si, generated by the whole element SDi via loop 37-i on a second input. Selector 36-i is controlled by signal labeled Start generated by the control logic block 18. The signal that is output from selector 36-i, labeled Fi, is applied to a first input of two-way AND gate 38-i, the other input of which receives the ANDing result between signals Fi-1 and Fbi+1 (NOT Fi+1) through two-way NAND gate 39-i. AND gates 38-i and 39-i thus implement the first step of the above described two-step algorithm. In turn, the signal Gi that is output from AND gate 38-i is applied to a first input of two-way AND gate 40-i, the other input of which receives the result of ANDing signals Gbi-1 (NOT Gi-1) and Gi+1 through two-way NAND gate 41-i to generate signal Hi. AND gates 40-i and 41-i thus implement the second step of the above described two-step algorithm.

Finally, signal Hi is applied to the data input of flip-flop 42-i to latch selection signal Si. The clock input of flip-flop 42-i receives clock phase C₁. As apparent in FIG. 7, two INVERTER gates 43-i and 44-i respectively generates signals Fbi (NOT Fi) and Gbi (NOT Gi) from signals Fi and Gi.

As mentioned above, flip-flop 31-i (see FIG. 6) collects the edge information using its asynchronous reset input. At the end of the edge information sampling time, the selection signal Start of selector 36-i (delivered by the control logic circuit 18) switches to the '1' level during one clock period and then returns to '0'. When it returns to '0', flip-flop 31-i can be synchronously set to '1' by having its clock input switching to '1' then back to '0'. The signal at the output of the selector 36i is combined using NAND, AND and INVERTER gates to execute the two steps of the above described algorithm. The F signal of the previous SD element (SDi-1), i.e. Fi-1, is combined in a NAND gate with the inverted F value of the next SD element (SDi+1), i.e. Fbi+1. The resulting signal is then ANDed with the Fi signal to form the Gi signal, thus effectively detecting the occurrence of the 110 pattern and forcing the middle '1' to a '0' when the pattern is found. Similarly, the Gi signal is combined with the G signal from adjacent SD element to detect the 011 pattern and replace the middle value thereof by a '0' when this pattern is found.

The Hi signal is captured in flip-flop 42-i at each clock phase C₁ rising edge to generate selection signal Si. By allowing the Hi signal to re-circulate through the selector 36-i via loop 37-i, one can see that the width of the zone initially filled with '1's at the flip-flop 42-i output of SDi element, will decrease until there is only one '1'. Extra iterations will be without any effect. The maximum number of iterations to be performed is equal to the fourth of the number of data samples in the case of DDR data (i.e. four iterations in the preferred implementation using sixteen samples per clock period) or one half of the number of data samples in the case of SDR data (i.e. eight iterations in the case of the preferred implementation). There is no penalty in having the data selection having to loop four or eight clock cycles as it is expected that the collection of data edges will last more time to ensure the data selection circuit 19 will take into account the data jitter.

FIG. 7 illustrates the assembly of 16 SD elements to build the totality of the selection determination circuit 15. The selection signals S(1:16) cannot be directly used to select the best data sample(s) to be kept as their values is subject to change between the different iterations. However, given the condition that the data edge collection delay in memory 14 is always greater than the iteration delay in circuit 15, the selection signals S(1:16) values are stored in a memory at the same time or just before taking new data edges are processed.

### 7. Description of the selection validation circuit 16

FIG. 8 shows a preferred implementation of the innovative selection validation circuit 16 of FIG. 2 which is another key feature of the present invention, because it has the essential role of validating the selection. Now turning to FIG. 8, a group of four four-way AND gates referenced 45-1 to 45-4 processes the selection signals S₁ to S₁₆, four per four. The outputs of these four AND gates are connected to the respective inputs of four-way NAND gate 46. In turn, the signal that is output from NAND gate 46 is applied to a first input of a battery of 16 two-way AND gates referenced 47-1 to 47-16. The respective selection signal is applied on the second input of each of these two-way AND gates, for instance selection signal S₁ is applied to AND gate 47-1 to generate signal VS₁ and so on.

If for some reasons, there is no data edge during the period between two RC (reset clock) signals, the selection determination circuit 15 will incorrectly indicate that each data sample is to be recovered by setting each selection signal S(1:16) to the '1' level. To avoid data recovery errors, the selection validation circuit 16 disable all selection signals when they all are at the '1' level. As apparent in FIG. 8, selection signals S₁ to S₁₆ are ANDed in two steps, first in AND gates 45-1 to 45-4, then in NAND gate 46 for technology reasons). As a result, NAND gate 42 output is at '1', if at least one selection signal is at '0' and at '0' otherwise. This output is then used as the validation signal for the selection signals S₁ to S₁₆. Therefore, VS₁ to VS₁₆ designate the selection signals that have been validated.

It is remarkable to notice that the determination of the best selection signals and their validation performed in circuits 15 and 16 only imply the use of only combinatorial logic instead of complex computation means such as a microprocessor.

### 8. Description of the selection memory 17

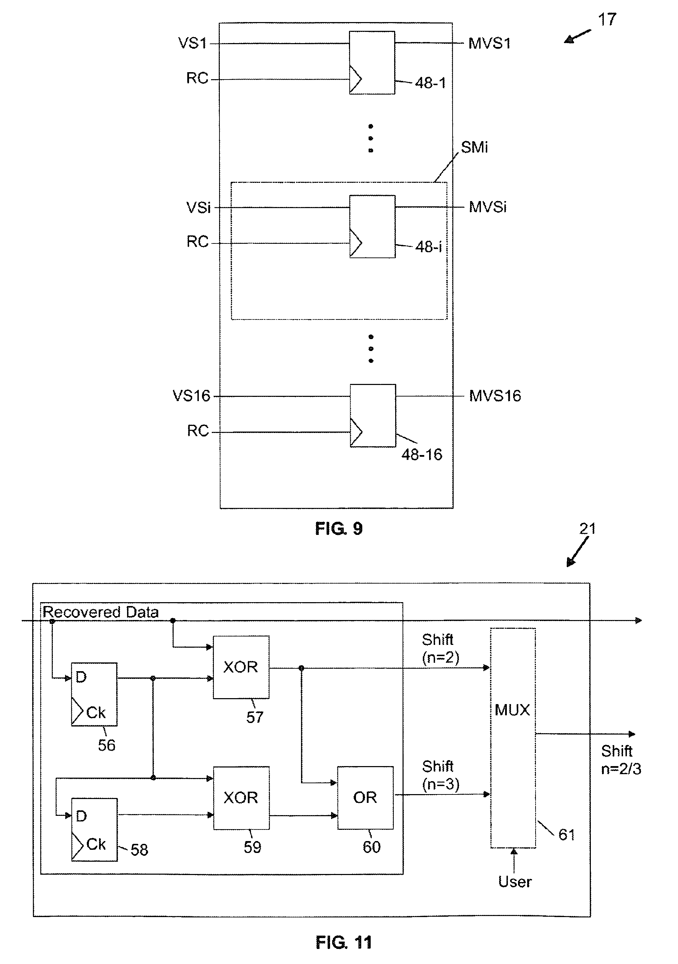

At this point, it is important to memorize the validated values of the selection signals, i.e. VS₁ to VS₁₆, so that these values can be used while new data edges are processed and new selection signals are updated. Selection memory block 17 can have a similar construction to the data edge memory block 14. Now turning to FIG. 9, let us consider validation memory element SMi, which simply consists of asynchronous reset flip-flop 48-i, the validated signal VSi is applied to its asynchronous input and its clock input connected to the reset signal RC. The signal latched in flip-flop 48-i, labeled MVSi, is kept for an extended length of time such as several tenths or hundreds of the reference clock period. The memorized validated selection signals in flip-flops 48-1 to 48-16 are labeled MVS₁ to MVS₁₆ respectively.

### 9. Description of the data sample selection circuit 19

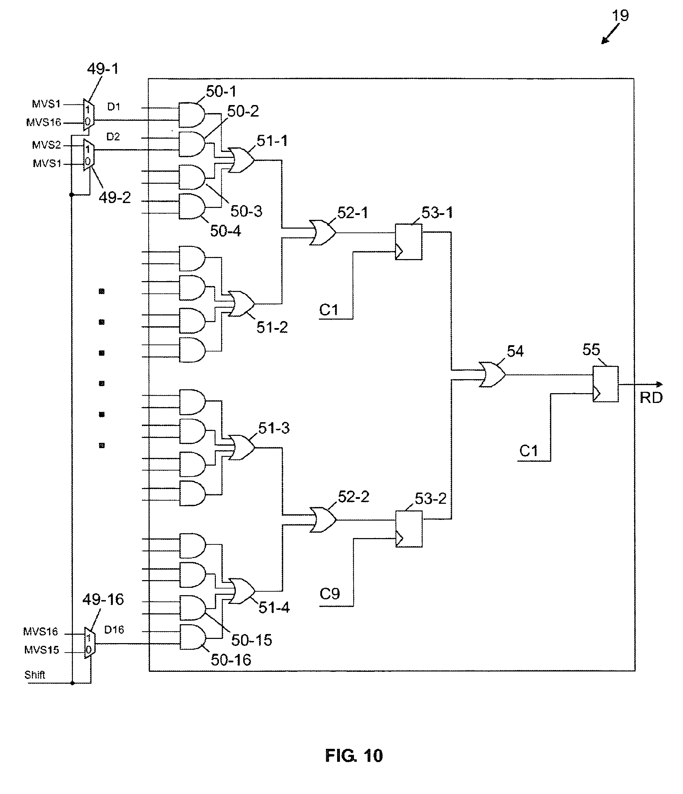

The data sample selection circuit 19 is depicted in FIG. 10. It first includes a battery of sixteen two-way multiplexers 49-1 to 49-16 that all receive the signal Shift on their control input. As apparent in FIG. 10, signals MVS₁₆ and MVS₁₆ are applied to multiplexer 49-1, signals MVS₂ and MVS₁ are applied to multiplexer 49-2 and so on till multiplexer 49-16 which receives signals MVS₁₆ and MVS₁₅. The signal that is output from each multiplexer is applied to a first input of a corresponding battery of sixteen two-way AND gates referenced 50-1 to 50-16 that are arranged in four groups of four gates.

Data samples D₁ to D₄ are applied to the other input of the AND gates 50-1 to 50-4 in the first group and so on till data samples D₁₃ to D₁₆ that are applied to the other input of AND gates 50-13 to 50-16 in the last group. In the first group, the output of AND gates 50-1 to 50-4 is connected to one input of a four-way OR gate referenced 51-1. The same construction applies to the other groups, so that there are four four-way OR gates referenced 51-1 to 51-4. The outputs of OR gates 51-1 and 51-2 are connected to the inputs of two-way OR gate 52-1.

Likewise, the outputs of AND gates 51-3 and 51-4 are connected to the inputs of two-way OR gate 52-2. In turn, the output of OR gate 52-1 is connected to the data input of flip-flop 53-1 whose clock input receives clock phase C₁. Similarly, the output of OR gate 52-2 is connected to the data input of flip-flop 53-2 whose clock input receives clock phase C₉ (in phase opposition with clock phase C₁). Signals latched in flip-flops 53-1 and 53-2 are applied to two-way OR gate 54, the output of which is connected to the data input of flip-flop 55, its clock input being driven by clock phase C₁.

The signal latched in flip-flop 55 is the recovered data RD.

The data sample selection circuit 19 shown in FIG. 10 illustrates how the memorized selection signals are exploited to recover the data. The best data sample is selected using AND gates (or AND-OR gates). The different combinations are then further combined using OR gates. If the data to recover is coming from the D₁ to D₈ range, it can be safely captured by the C₁ clock phase. On the contrary, if it comes from the D₉ to D₁₆ range, it is captured by the C₉ clock phase. The OR gate 54 then combines the data coming from flip-flops 53-1 and 53-2 and the recovered data RD is captured by the C₁ clock phase.

The role of the Shift signal is to shift the selection of a data sample of one position to compensate ISI. For instance, let us assume that memorized validated selection signals MVS₂ has been selected, if there is no ISI this signal will be sent to circuit 19, on the contrary, if there is ISI, signal MVS₁ will be sent instead (to compensate the right shift effect of ISI mentioned above).

In the case of DDR data, two circuits 19'/19" identical to the data sample selection circuit 19 of FIG. 10 would then be necessary. An additional requirement would be that each circuit uses two different set of memorized validated selection signals MVS(1:16), each one pointing a different data sample to recover. Such a circuit able to split the present set of the validated selection signals VS(1:16) in two sets is not shown but could be easily designed by an ordinary skilled professional.

### 10. Description of the detection/configuration circuit 21

FIG. 11 is a simplified block diagram of a preferred implementation of the detection circuit 21. The recovered data is captured by the flip-flop 56 on its data input D, so that its output represents the recovered data of the previous clock period. A 2-way XOR gate 57 compares the recovered data with the signal that is output of flip-flop 56, generating thereby a first Shift signal, that allows to identify two consecutive identical data bits, i.e. N=2. As a matter of fact, a '0' at the XOR gate 57 output, means a sequence of two or more consecutive identical data bits. Alternatively, another Shift signal can be implemented to indicate a sequence of three or more consecutive identical data bits, i.e. N=3. To that end, the flip-flop 56 output also drives the data input of flip-flop 58 and one input of 2-way XOR gate 59 which receives the flip-flop 58 output on its other input. The signal generated by the flip-flop 58 represents the recovered data with a two clock period delay. The signals output by XOR gates 57 and 59 are applied to OR gate 60. The signal that is output therefrom is therefore representative of a sequence of three or more identical data bits when it is equal to '0'. The user may choose to apply either Shift signal, i.e. corresponding to either N=2 or N=3, via two-way multiplexer 61.

The performance of the improved data recovery circuit 10 is limited by the resolution of the oversampling circuit 12. However, it is not an added penalty, because the resolution of the data recovery circuit 10 using an oversampling technique is already limited by the delay between adjacent clock phases.

Improved data recovery circuit 10 provides a simple way to compensate ISI perturbations with the addition of very few circuit elements and at a very low cost as a whole.

While the invention has been particularly described with respect to a preferred embodiment thereof it should be understood by one skilled in the art that the foregoing and other changes in form and details may be made therein without departing from the scope of the invention.

## Claims

1. An improved data recovery circuit (10) comprising:
a multiphase clock generator (11) for generating multiple clock phases (C₁-Cₙ) derived from a main clock (clk) ;
an oversampling circuit (12) coupled to said multiphase clock generator, for receiving an incoming stream of serial data to recover that is perturbed by ISI and for delivering a set of data samples (D₁-Dₙ), one per clock phase;
a decision circuit (20) for receiving the data samples to collect the data edges or transitions over a plurality of data bit periods to determine the position of the best data sample that must be selected to represent the data to recover and for generating selection signals (MVS₁ to MVSₙ) indicative thereof;
a data sample selection circuit (19) for receiving the data samples and said selection signals delivered by the decision circuit to select the best data sample to be kept as the ideal recovered data (RD); and,
said data recovery circuit **characterised by** further comprising:
a detection circuit (21) for receiving said recovered data and for detecting a sequence of a predetermined number N of consecutive identical data bits, so that when such a sequence of consecutive identical data bits is identified, it generates a feedback signal (Shift) that is applied to the decision circuit to prevent it to take into account the transition that immediately follows such a sequence of identical data bits and is applied to the data sample selection circuit to shift the selection by one position to select the next data sample corresponding to the next data transition.

2. The improved data recovery circuit of claim 1 wherein said detection circuit is used to predict presence of ISI in said incoming stream of data by detecting the consecutive values of the recovered data.

3. The improved data recovery circuit of claim 1 wherein said detection circuit includes flip-flops (56,58) to memorize the previous state of the recovered data when none data transition is detected within said predetermined number of clock periods.

4. The improved data recovery circuit of claim 1 wherein said detection circuit includes latches (32,33) placed on the path of said data samples to delay the detected transitions by two clock periods to compensate the data sample selection circuit latency.

5. The improved data recovery circuit of claim 1 or 2 wherein N is equal to either 2 or 3.

## Patentansprüche

1. Verbesserte Datenrückgewinnungs-Schaltung (10), die Folgendes umfasst:
einen Mehrphasen-Taktgenerator (11) zum Erzeugen mehrerer Taktphasen (C₁ bis Cₙ), die von einem Haupttakt (clk) hergeleitet werden;
eine Überabtastschaltung (12), die mit dem Mehrphasen-Taktgenerator verbunden ist, um einen eingehenden Strom wiederherzustellender serieller Daten zu empfangen, die durch ISI (Intersymbolinterferenz) gestört sind, und um einen Satz von Datenabtastungen (D₁ bis Dₙ), für jede Taktphase jeweils eine, zu liefern;
eine Entscheidungsschaltung (20) zum Empfangen der Datenabtastungen, um die Datenflanken oder -übergänge über eine Vielzahl von Datenbit-Perioden zu sammeln, um die Position der besten Datenabtastung zu ermitteln, die zum Wiedergeben der wiederherzustellenden Daten ausgewählt werden muss, und um Auswahlsignale (MVS₁ bis MVSₙ), die für diese Datenabtastung kennzeichnend sind, zu erzeugen;
eine Datenabtast-Auswahlschaltung (19) zum Empfangen der Datenabtastungen und der Auswahlsignale, die von der Entscheidungsschaltung zum Auswählen der besten Datenabtastung erzeugt wurden, die als die besten wiederhergestellten Daten (RD, recovered data) erhalten werden sollen; und
wobei die Datenrückgewinnungs-Schaltung ferner durch das Folgende **gekennzeichnet** ist:
eine Erkennungsschaltung (21) zum Empfangen der wiederhergestellten Daten und zum Erkennen einer Folge einer vorbestimmten Anzahl N aufeinanderfolgender identischer Datenbits, sodass beim Erkennen einer solchen Folge aufeinanderfolgender identischer Datenbits ein Rückkopplungssignal (Shift) erzeugt wird, das der Entscheidungsschaltung zugeführt wird, um zu vermeiden, dass sie den auf eine solche Folge identischer Datenbits unmittelbar folgenden Übergang berücksichtigt, und der Datenabtast-Auswahlschaltung zugeführt wird, um die Auswahl um eine Position zu verschieben, um die Datenabtastung, die dem nächsten Datenübergang entspricht, auszuwählen.

2. Verbesserte Datenrückgewinnungs-Schaltung nach Anspruch 1, wobei die Erkennungsschaltung zum Voraussagen des Vorhandenseins von ISI in dem eingehenden Datenstrom verwendet wird, indem die aufeinanderfolgenden Werte der wiederhergestellten Daten ermittelt werden.

3. Verbesserte Datenrückgewinnungs-Schaltung nach Anspruch 1, wobei die Erkennungsschaltung Flipflop-Schaltungen (56, 58) zum Speichern des vorherigen Zustands der wiederhergestellten Daten enthält, wenn kein Datenübergang innerhalb der vorbestimmten Anzahl von Taktperioden festgestellt wird.

4. Verbesserte Datenrückgewinnungs-Schaltung nach Anspruch 1, wobei die Erkennungsschaltung Haltespeicher (32, 33) enthält, die auf dem Pfad der Datenabtastungen angeordnet sind, um die ermittelten Übergänge zum Kompensieren der Latenzzeit der Datenabtastungs-Erkennungsschaltung um zwei Taktperioden zu verzögern.

5. Verbesserte Datenrückgewinnungs-Schaltung nach Anspruch 1 oder 2, wobei N entweder zwei oder drei beträgt.

## Revendications

1. Un circuit de récupération de données (10) amélioré, comprenant :
un générateur d'horloge multiphase (11) ; pour générer une pluralité de phases d'horloge (C₁ à Cₙ), dérivées d'une horloge principale (clk) ;
un circuit de suréchantillonnage (12), couplé audit générateur d'horloge multiphase, pour recevoir un flux entrant de données série, pour récupérer ce qui est perturbé par une interférence intersymbole ISI et pour délivrer un jeu d'échantillons de données (D1 à Dn), un par phase d'horloge ;
un circuit de décision pour recevoir les échantillons de données, pour collecter les bords ou transitions de données, sur une pluralité de périodes de bits de données, afin de déterminer la position du meilleur échantillon de données, qui doit être sélectionné pour représenter les données à récupérer, et générer des signaux de sélection (MVS1 à MVSn) indicatifs de celle-ci ;
un circuit de sélection d'échantillons de données (19), pour recevoir les échantillons de données et lesdits signaux de sélection, délivrés par le circuit de sélection, pour déterminer le meilleur échantillon de données à conserver en tant que données récupérées (RD) idéales ; et
ledit circuit de récupération de données étant **caractérisé par** le fait de comprendre en outre :
un circuit de détection (21), pour recevoir lesdites données récupérées et pour détecter une séquence, d'un nombre N prédéterminé, de bits de données identiques consécutifs, de manière que, lorsqu'une telle séquence de bits de données identiques consécutifs est identifiée, elle génère un signal de rétroaction (Shift), appliqué au circuit de décision, afin de l'empêcher de prendre en compte la transition faisant immédiatement suite à une telle séquence de bits de données identiques et est appliqué au circuit de sélection d'échantillons de données, pour décaler d'une position la sélection, pour sélectionner l'échantillon de données suivant, correspondant à la transition de données suivante.

2. Le circuit de récupération de données amélioré selon la revendication 1, dans lequel ledit circuit de détection est utilisé pour prédire la présence d'une interférence intersymbole ISI dans ledit flux de données entrant, par détection des valeurs consécutives des données récupérées.

3. Le circuit de récupération de données amélioré selon la revendication 1, dans lequel ledit circuit de détection comprend des bascules monostables (56, 58), pour mémoriser l'état antérieur des données récupérées, lorsqu'aucune transition de données n'est détectée dans ledit nombre prédéterminé de périodes d'horloges.

4. Le circuit de récupération de données amélioré selon la revendication 1, dans lequel ledit circuit de détection comprend des verrous (32, 33), placés sur le chemin desdits échantillons de données, afin de retarder de deux périodes d'horloge les transitions détectées, pour compenser la latence du circuit de sélection d'échantillon de données.

5. Le circuit de récupération de données amélioré selon la revendication 1 ou 2, dans lequel N est égal à 2 ou 3.
